# EUROPEAN PATENT APPLICATION

(11) **EP 3 467 368 A1**
(43) Date of publication of application: **10.04.2019**
(21) Application number: 17194831.8
(22) Date of filing: 04.10.2017
(51) Int. Cl.: F16L 37/56

(54) **A HYDRAULIC COUPLING**

(71) Applicant: Ningbo Geely Automobile Research & Development Co. Ltd., Hangzhou Bay New District Ningbo 315336 (CN)
(72) Inventor: BIRATH, Albin, 414 83 Göteborg (SE)
(74) Representative: Zacco Sweden AB

(57) **Abstract**

The invention relates to a male hydraulic coupling member (10) comprising a body (14) which has a first inlet port (15) for connection to a first source of hydraulic fluid (2), a first outlet port (16), and a first channel (17) extending between the first inlet port and the first outlet port. The body further has a second inlet port (18) for connection to a second source of hydraulic fluid (4), a second outlet port (19), and a second channel (20) extending between the second inlet port and the second outlet port. The body (14) is provided with a quick coupling (12) for mechanical connection to a female hydraulic coupling member (11) by movement in a quick coupling direction (13) such that the first inlet port (15b) and the second inlet port (18b), or the first outlet port (16) and the second outlet port (19), are hydraulically connected to a first port (21 b; 21) and a second port (22b; 22), respectively, of the female hydraulic coupling member (11).

## Description

### TECHNICAL FIELD

The invention relates to a male hydraulic coupling member and an apparatus comprising such a male hydraulic coupling member.

### BACKGROUND

Dual clutch transmissions have a first clutch for one set of gears and a second clutch for another set of gears. The first clutch and the second clutch are activated one at a time, usually by a first hydraulic piston and a second hydraulic piston. For each of the clutches, an activation unit with a hydraulic fluid source can be arranged for creating a hydraulic pressure that causes the piston to close the clutch, and a mechanical spring can be arranged to open the clutch when the hydraulic pressure is removed. The same conduit can be used for providing hydraulic fluid to the piston as well as for returning hydraulic fluid to the hydraulic fluid source. Each such conduit is arranged to extend from the respective hydraulic fluid source to the current piston. Due to the limited space, the mounting of such conduits can be relatively difficult and time-consuming.

### SUMMARY

An objective of the invention is to provide a component enabling an easier and less time-consuming mounting of hydraulic conduits.

This objective is achieved by a male hydraulic coupling member that comprises a body having a first inlet port for connection to a first source of hydraulic fluid, a first outlet port, and a first channel extending between the first inlet port and the first outlet port, and further having a second inlet port for connection to a second source of hydraulic fluid, a second outlet port, and a second channel extending between the second inlet port and the second outlet port, wherein the body is provided with a quick coupling for mechanical connection to a female hydraulic coupling member by movement in a quick coupling connection direction such that the first inlet port and the second inlet port, or the first outlet port and the second outlet port, are hydraulically connected to a first port and a second port, respectively, of the female hydraulic coupling member.

The invention is based on the insight that such a male hydraulic coupling member can facilitate the mounting and reduce the mounting time. In addition, in comparison to use a hydraulic coupling for each conduit, the number of components and the risk of incorrectly assembling the components can be reduced.

The term "quick coupling" is meant to comprise such couplings (not using any threads) that can be handled by hand without any tool, and be connected by pushing the male hydraulic coupling member into a female hydraulic coupling member, and be released by pulling the male hydraulic coupling member from the female hydraulic coupling member, suitably in combination with a locking function for preventing the quick coupling to be accidentally released.

For example, when using such a male hydraulic coupling member for connecting a first and a second activation unit to a first and second piston for controlling a first and a second clutch of a dual clutch transmission, the conduits from the hydraulic sources of the activation units can easily be connected to the pistons at the same time by pushing the male hydraulic coupling member into a female hydraulic coupling member without any use of a tool.

According to one embodiment, the body comprises an inner tubular element and an outer tubular element, and the inner tubular element and the outer tubular element are arranged concentrically relative to each other, and the first channel is formed by the inner tubular element and the second channel is formed by a space between an outer surface of the inner tubular element and an inner surface of the outer tubular element. Hereby, the male hydraulic coupling member can be manufactured in an efficient way and provide suitable positions for the first outlet and the second outlet.

According to another aspect of the invention, a further objective is to provide an apparatus for controlling a first clutch and a second clutch of a dual clutch transmission, for which apparatus the mounting is easier and less time-consuming.

This objective is achieved by an apparatus for controlling a first clutch and a second clutch of a dual clutch transmission, wherein the apparatus comprises a first activation unit with a first hydraulic fluid source providing a hydraulic pressure for controlling a first piston to close the first clutch, and a second activation unit with a second hydraulic fluid source providing a hydraulic pressure for controlling a second piston to close the second clutch, and further comprisers a male hydraulic coupling member according to the invention for hydraulically connecting the first activation unit and the second activation unit to the first piston and the second piston, respectively.

The advantages of the apparatus are similar to the advantages already discussed hereinabove with reference to the different embodiments of the male hydraulic coupling member.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a perspective view of an apparatus for controlling a first clutch and a second clutch of a dual clutch transmission,
Fig. 2 is a cut view of a hydraulic coupling comprising a male hydraulic coupling member and a female hydraulic coupling member,
Fig. 3 is showing the male hydraulic coupling member illustrated in Fig. 2,
Fig. 4 is showing the female hydraulic coupling member illustrated in Fig 2, and
Fig. 5 is a variant of the hydraulic coupling illustrated in Fig. 2.

### DETAILED DESCRIPTION OF EXAMPLE EMBODIMENTS

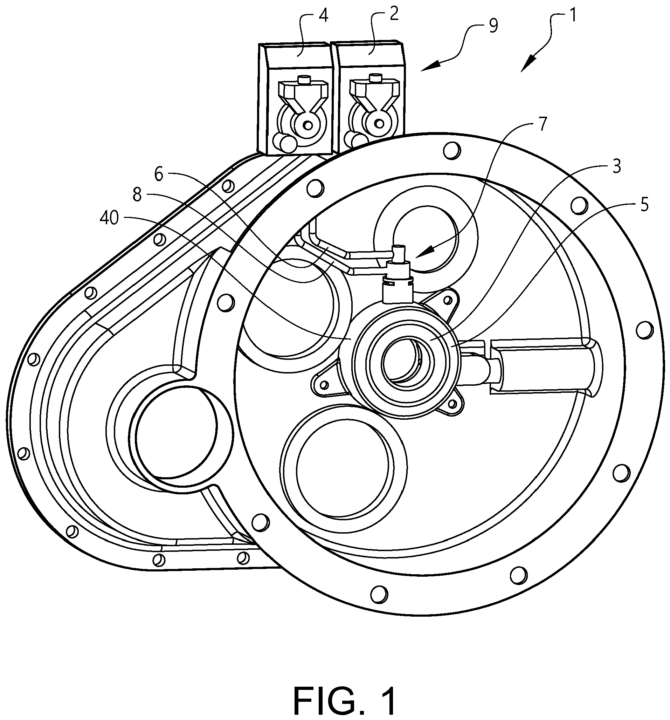

Fig. 1 illustrates an apparatus 1 for controlling a first clutch and a second clutch of a dual clutch transmission. The apparatus 1 comprises a first activation unit 2 with a first hydraulic fluid source providing a hydraulic pressure for controlling a first piston 3 to close the first clutch (not shown) and a second activation unit 4 with a second hydraulic fluid source providing a hydraulic pressure for controlling a second piston 5 to close the second clutch (not shown).

A first conduit 6 is arranged for providing hydraulic fluid to the first piston 3 for closing the first clutch. The first conduit 6 extends from the first activation unit 2 to a hydraulic coupling 7. The hydraulic coupling 7 is hydraulically connected to the first piston 3. The hydraulic pressure can be achieved by an electric motor 9 of the first activation unit 2. The first conduit 6 can also be used as a return line for hydraulic fluid flowing from the first piston 3 to the first activation unit 2 when the first clutch is to be opened. For example, when the hydraulic pressure is lowered the first piston 3 can be pushed back by a mechanical spring for opening the first clutch.

In the same way, a second conduit 8 is arranged for providing hydraulic fluid to the second piston 5 for closing the second clutch. The second conduit 8 extends from the second activation unit 4 to the hydraulic coupling 7. The hydraulic coupling 7 is hydraulically connected to the second piston 5. The hydraulic pressure can be achieved by an electric motor of the second activation unit 4. The second conduit 8 can also be used as a return line for hydraulic fluid flowing from the second piston 5 to the second activation unit 4 when the second clutch is to be opened. For example, when the hydraulic pressure is lowered the second piston 5 can be pushed back by a mechanical spring for opening the second clutch.

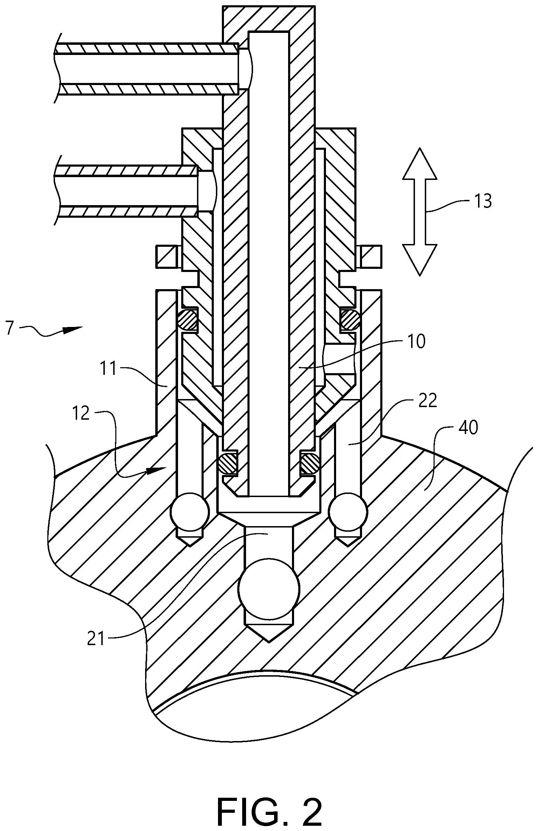

In Fig. 2 the hydraulic coupling 7 is illustrated in a cut view. The hydraulic coupling 7 comprises a male hydraulic coupling member 10 and a female hydraulic coupling member 11. The male hydraulic coupling member 10 and the female hydraulic coupling member 11 are mechanically connectable and releasable relative to each other by means of a quick coupling 12, also called quick connector. The male hydraulic coupling member 10 can be pulled out from the female hydraulic coupling member 11 for disconnecting the first and second activation units 2, 4 from the first and second pistons 3, 5 (illustrated in Fig. 1), and be pushed into the female hydraulic coupling member 11 for hydraulically connecting the first and second activation units 2, 4 to the first and second pistons 3, 5.

The hydraulic coupling 7 has a quick coupling connection direction 13, i.e. the male hydraulic coupling member 10 and the female hydraulic coupling member 11 are moved towards each other in this direction 13 for connection to each other. The male hydraulic coupling member 10 and the female hydraulic coupling member 11 are moved away from each other in this direction 13 for releasing the male hydraulic coupling member 10 and the female hydraulic coupling member 11 from each other. The connection and releasing movements along the quick coupling connection direction 13 are preferably linear movements.

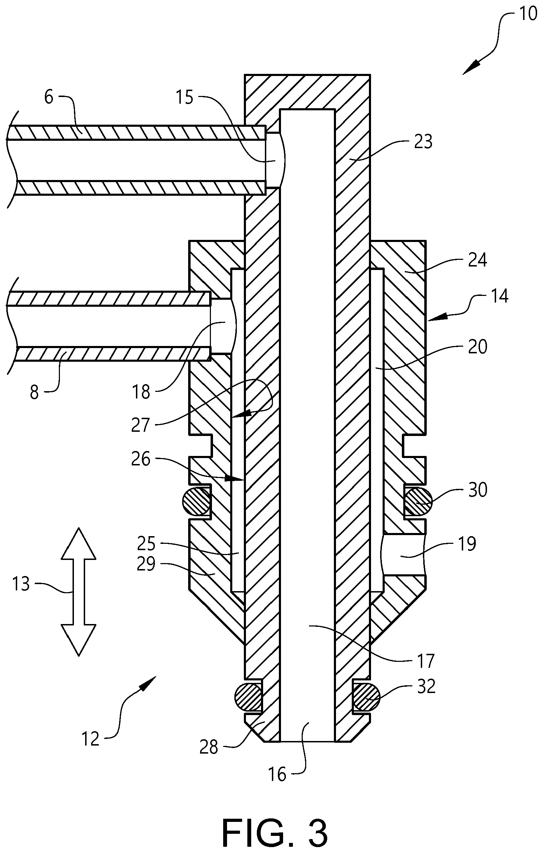

In Fig. 3 one example embodiment of the male hydraulic coupling member 10 is illustrated in a cut view. The male hydraulic coupling member 10 comprises a body 14 having a first inlet port 15 for connection to a first source of hydraulic fluid. This first hydraulic fluid source can be the first activation unit 2. The male hydraulic coupling member 10 has a first outlet port 16 and a first channel 17 extending between the first inlet port 15 and the first outlet port 16. The male hydraulic coupling member 10 further has a second inlet port 18 for connection to a second source of hydraulic fluid. This second hydraulic fluid source can be the second activation unit 4. The male hydraulic coupling member 10 has a second outlet port 19 and a second channel 20 extending between the second inlet port 18 and the second outlet port 19.

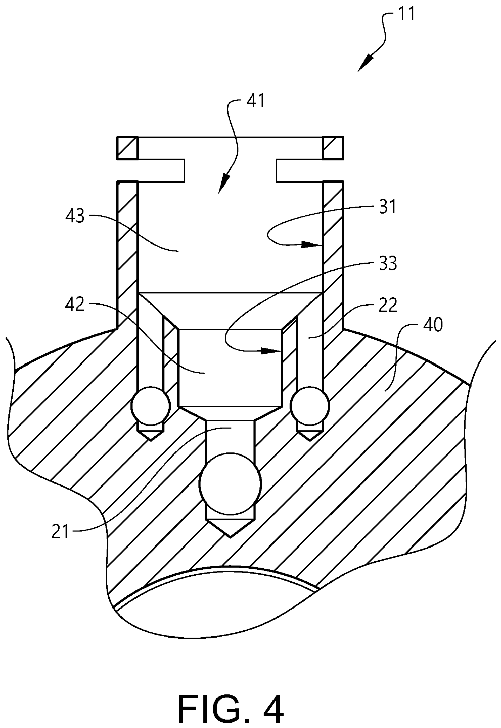

The body 14 is provided with a quick coupling 12 for mechanical connection to the female hydraulic coupling member 11 such that the first outlet port 16 and the second outlet port 19 are hydraulically connected to a first port 21 and a second port 22, respectively, of the female hydraulic coupling member 11. This is performed by movement of the male hydraulic coupling member 10 and the female hydraulic coupling member 11 towards each other in the quick coupling connection direction 13. See also Figs. 2 and 4.

Although the ports 15, 16, 18, 19 of the body 14 are indicated as inlet ports 15, 18 or outlet ports 16, 19, an inlet port can of course act as an outlet port, and an outlet port can act as an inlet port, when hydraulic fluid flows in the opposite direction, for example from a piston to an activation unit.

With further reference to the Fig. 3, the first channel 17 is suitably arranged in a central portion of the body 14 and extends in the quick coupling connection direction 13. The second channel 20 is suitably arranged in an outer portion of the body 14 and extends in the quick coupling connection direction 13. By the wording "in the quick coupling connection direction" is here intended substantially in this direction or in other words; in a direction that has a minor deviation, such as within ±10°, or preferably within ±5°, from this direction.

In the example embodiment illustrated in Fig. 3, the body 14 comprises an inner tubular element 23 and an outer tubular element 24. The inner tubular element 23 and the outer tubular element 24 are arranged concentrically relative to each other. The first channel 17 is formed by the inner tubular element 23. The second channel 20 is formed by a space 25 between an outer surface 26 of the inner tubular element 23 and an inner surface 27 of the outer tubular element 24. The inner tubular element 23 and the outer tubular element 24 can be attached to each other by any suitable joining method, such as for example welding. The body 14 can be made from a metal or plastic or any other suitable material.

Further, a first outer portion 28 of the quick coupling 12 can be arranged at an end of the male hydraulic coupling member 10 and a second inner portion 29 of the quick coupling 12 can be arranged adjacent to the first outer portion 28. In this case, the cross-section dimension of the second inner portion 29 is greater than the cross-section dimension of the first outer portion 28. The quick coupling 12 of the body 14 has preferably a circular cross section, where the outer diameter of the second inner portion 29 of the quick coupling 12 is greater than the outer diameter of the first outer portion 28 of the quick coupling 12.

The first outlet port 16 is suitably arranged in the first outer portion 28 of the quick coupling 12. The second outlet port 19 is suitably arranged in the second inner portion 29 of the quick coupling 12.

The first outlet port 16 is preferably arranged for a main flow direction of hydraulic fluid being in parallel with the quick coupling connection direction 13. By the wording "in parallel with" is intended substantially in parallel with or in other words; in a direction that has a minor deviation, such as within ±10°, or preferably within ±5°, from a parallel direction.

The second outlet port 19 is preferably arranged for a main flow direction of hydraulic fluid being perpendicular to the quick coupling connection direction 13. By the wording "perpendicular to" is intended substantially perpendicular to or in other words; in a direction that has a minor deviation, such as within ±10°, or preferably within ±5°, from a perpendicular direction.

The example embodiment of the male hydraulic coupling member 10 illustrated in Fig. 3 has a first seal 30 and a second seal 32. The first seal 30 is arranged for sealing against a first surface 31 of the female hydraulic coupling member 11. See also Fig. 4. This first seal 30 counteracts leakage of hydraulic fluid from the hydraulic coupling to the environment, primary the second outlet 19 of the male hydraulic coupling member 10 and corresponding port 22 of the female hydraulic coupling member 11 are sealed relative to the environment.

The second seal 32 is arranged for sealing against a second surface 33 of the female hydraulic coupling member 11. See also Fig. 4. This second seal 32 counteracts leakage of hydraulic fluid from the hydraulic coupling to the environment, primary the first outlet 16 of the male hydraulic coupling member and the port 21 of the female hydraulic coupling member 11 are sealed relative to the second outlet 19 of the male hydraulic coupling member 10 and the port 22 of the female hydraulic coupling member 11, and relative to the environment.

The first seal 30 can be arranged on the second inner portion 29 of the quick coupling 12. The second seal 32 can be arranged on the first outer portion 28 of the quick coupling 12.

Fig. 4 shows the female hydraulic coupling member 11 illustrated in Fig. 2. The female hydraulic coupling member 11 and the piston housing 40 can be made in one piece, or the female hydraulic coupling member 11 can be manufactured as a separate component that is mounted in the piston housing 40. The female hydraulic coupling member 11 has a recess 41 for receiving the male hydraulic coupling member 10. An inner space 42 is arranged for receiving the first outer portion 28 of the male hydraulic coupling member 10 and an outer space 43 is arranged for receiving the second inner portion 29 of the male hydraulic coupling member 10. The inner space is formed by the second surface 33 and the outer space is formed by the first surface 31.

Further, in an example embodiment as illustrated in Fig. 1, the first port 21 of the female hydraulic coupling member 11 is hydraulically connected to the first piston 3. The second port 22 of the female hydraulic coupling member is hydraulically connected to the second piston 5.

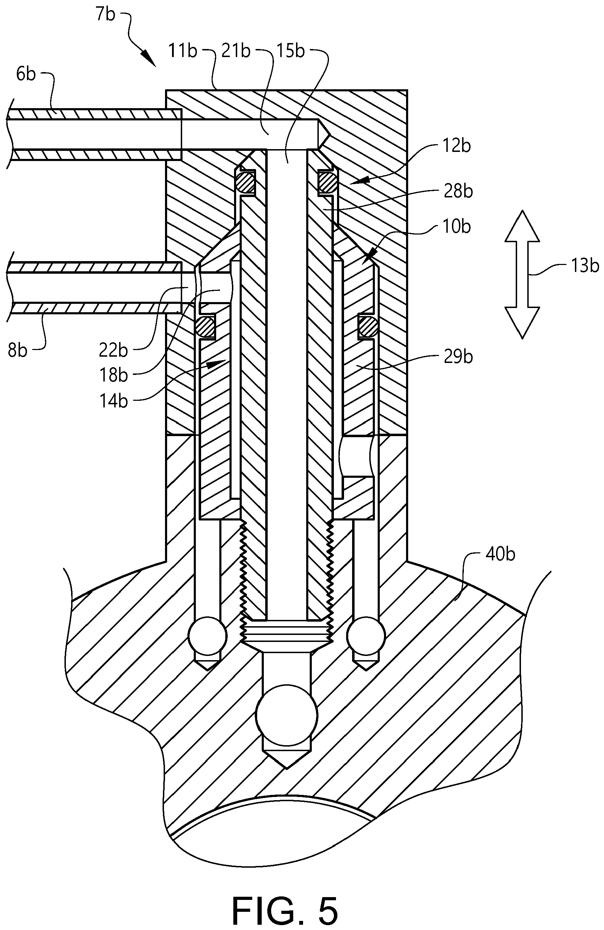

As illustrated in Fig. 5, alternatively, the hydraulic coupling 7b can be arranged in the opposite direction. This means that in an example embodiment as illustrated in Fig. 1, the first and second conduits 6b, 8b would instead be connected to the female hydraulic coupling member 11 b and the male hydraulic coupling member 10b would be connected to the piston housing 40b. The male hydraulic coupling member 10b and the piston housing 40b can be made in one piece, or the male hydraulic coupling member 10b can be manufactured as a separate component that is mounted in the piston housing 40b. For example, the male hydraulic coupling member 11 b can be attached to the piston housing 40b by a threaded joint.

In such an example embodiment of the male hydraulic coupling member 10b, the body 14b is provided with a quick coupling 12b for mechanical connection to the female hydraulic coupling member 11 b such that the first inlet port 15b and the second inlet port 18b of the male hydraulic coupling member 10b are hydraulically connected to the first port 21 b and the second port 22b, respectively, of the female hydraulic coupling member 11 b. This is performed by movement of the male hydraulic coupling member 10b and the female hydraulic coupling member 11 b towards each other in the quick coupling connection direction 13b.

In this embodiment, the first inlet port 15b is suitably arranged in the first outer portion 28b of the quick coupling 12b, and the second inlet port 18b is suitably arranged in the second inner portion 29b of the quick coupling 12b.

Further, the first port 21 b and the second port 22b of the female hydraulic coupling member 11 b are hydraulically connected to the first activation unit 2 and the second activation unit 4, respectively, whereas the first outlet port 16b and the second outlet port 19b of the male hydraulic coupling member 10b are hydraulically connected to the first piston 3 and the second piston 5, respectively.

As regards remaining features of the example embodiment of the male hydraulic coupling member illustrated in Fig. 5, reference is made to the description hereinabove since these features are similar to the features of other example embodiments already described.

It is to be understood that the present invention is not limited to the embodiments described above and illustrated in the drawings; rather, the skilled person will recognize that many changes and modifications may be made within the scope of the appended claims.

## Claims

1. A male hydraulic coupling member (10) comprising a body (14) having a first inlet port (15) for connection to a first source of hydraulic fluid (2), a first outlet port (16), and a first channel (17) extending between the first inlet port and the first outlet port, and further having a second inlet port (18) for connection to a second source of hydraulic fluid (4), a second outlet port (19), and a second channel (20) extending between the second inlet port and the second outlet port, **characterized in that** the body (14) is provided with a quick coupling (12) for mechanical connection to a female hydraulic coupling member (11) by movement in a quick coupling connection direction (13) such that the first inlet port (15b) and the second inlet port (18b), or the first outlet port (16) and the second outlet port (19), are hydraulically connected to a first port (21 b; 21) and a second port (22b; 22), respectively, of the female hydraulic coupling member (11).

2. A male hydraulic coupling member according to claim 1, **characterized in that** the first channel (17) is arranged in a central portion of the body (14) and extends in the quick coupling connection direction (13).

3. A male hydraulic coupling member according to claim 1 or 2, **characterized in that** the second channel (20) is arranged in an outer portion of the body (14) and extends in the quick coupling connection direction (13).

4. A male hydraulic coupling member according to claim 2 and 3, **characterized in that** the body (14) comprises an inner tubular element (23) and an outer tubular element (24), the inner tubular element and the outer tubular element being arranged concentrically relative to each other, the first channel (17) being formed by the inner tubular element (23) and the second channel (20) being formed by a space (25) between an outer surface (26) of the inner tubular element (23) and an inner surface (27) of the outer tubular element (24).

5. A male hydraulic coupling member according to any preceding claim, **characterized in that** the first outlet port (16) is arranged for a main flow direction of hydraulic fluid being in parallel with the quick coupling connection direction (13).

6. A male hydraulic coupling member according to any preceding claim, **characterized in that** the second outlet port (19) is arranged for a main flow direction of hydraulic fluid being perpendicular to the quick coupling connection direction (13).

7. A male hydraulic coupling member according to any preceding claim, **characterized in that** the first inlet port (15b) is arranged for a main flow direction of hydraulic fluid being in parallel with the quick coupling connection direction (13b).

8. A male hydraulic coupling member according to any preceding claim, **characterized in that** the second inlet port (18b) is arranged for a main flow direction of hydraulic fluid being perpendicular to the quick coupling connection direction (13b).

9. A male hydraulic coupling member according to any preceding claim, **characterized in that** a first outer portion (28; 28b) of the quick coupling (12; 12b) is arranged at an end of the male hydraulic coupling member (10; 10b) and a second inner portion (29; 29b) of the quick coupling (12; 12b) is arranged adjacent to the first outer portion (28; 28b), the cross-section dimension of the second inner portion (29; 29b) is greater than the cross-section dimension of the first outer portion (28; 28b).

10. A male hydraulic coupling member according to claim 9, **characterized in that** the first outlet port (16) is arranged in the first outer portion (28) of the quick coupling (12).

11. A male hydraulic coupling member according to claim 9 or 10, **characterized in that** the second outlet port (19) is arranged in the second inner portion (29) of the quick coupling (12).

12. A male hydraulic coupling member according to claim 9, **characterized in that** the first inlet port (15b) is arranged in the first outer portion (28b) of the quick coupling (12b).

13. A male hydraulic coupling member according to claim 9 or 12, **characterized in that** the second inlet port (18b) is arranged in the second inner portion (29b) of the quick coupling (12b).

14. An apparatus (1) for controlling a first clutch and a second clutch of a dual clutch transmission, the apparatus comprising a first activation unit (2) with a first hydraulic fluid source providing a hydraulic pressure for controlling a first piston (3) to close the first clutch, and a second activation unit (4) with a second hydraulic fluid source providing a hydraulic pressure for controlling a second piston (5) to close the second clutch, the apparatus (1) further comprising a male hydraulic coupling member (10) according to any of claims 1-13 for hydraulically connecting the first activation unit (2) and the second activation unit (4) to the first piston (3) and the second piston (5), respectively.
